# EUROPÄISCHE PATENTANMELDUNG

(11) **EP 4 782 769 A1**
(43) Veröffentlichungstag der Anmeldung: **29.07.2026**
(21) Anmeldenummer: 25223366.3
(22) Anmeldetag: 15.12.2025
(51) Int. Cl.: F25D 25/02, A47B 88/453, H02K 41/00

(54) **SCHUBLADENVORRICHTUNG FÜR EIN KÜHLGERÄT, KÜHLGERÄT MIT EINER SCHUBLADENVORRICHTUNG UND VERFAHREN ZUM BETREIBEN EINER SCHUBLADENVORRICHTUNG**

(30) Priorität: 28.01.2025 DE 102025103004
(71) Anmelder: Miele & Cie. KG, 33332 Gütersloh (DE)
(72) Erfinder: Westergerling, Mario, 33334 Gütersloh (DE); Schmelter, Stefan, 33330 Gütersloh (DE); Franzmeier, Jens, 32052 Herford (DE)

(57) **Zusammenfassung**

Eine Schubladenvorrichtung (100) für ein Kühlgerät (105) weist eine Korpuseinheit (110), eine Schubladeneinheit (115) und einen Linearmotor (120) auf. Die Korpuseinheit (110) ist zur Aufnahme der Schubladeneinheit (115) ausgeformt. Die Schubladeneinheit (115) ist gegenüber der Korpuseinheit (110) beweglich gelagert, wobei die Schubladeneinheit (115) mittels einer Linearbewegung (122) zwischen einer Schließposition (125) und einer Offenposition beweglich ist. Der Linearmotor (120) ist ausgebildet, um die Linearbewegung (122) zu bewirken, wobei der Linearmotor (120) eine Elektromagneteinheit (135) und eine Anordnung aus einer Mehrzahl von linear angeordneten Magneten (140) mit abwechselnder Nordpolarität (N) und Südpolarität (S) aufweist.

## Beschreibung

Die Erfindung betrifft eine Schubladenvorrichtung für ein Kühlgerät, ein Kühlgerät mit einer Schubladenvorrichtung und ein Verfahren zum Betreiben einer Schubladenvorrichtung.

Die EP 3 165 858 A1 beschreibt eine Schublade oder einen Fachboden, der mit einem Motor zum Herausführen und zum Einschieben bewegt wird.

Der hier vorgestellte Ansatz stellt sich die Aufgabe, eine verbesserte Schubladenvorrichtung für ein Kühlgerät, ein verbessertes Kühlgerät mit einer Schubladenvorrichtung und ein verbessertes Verfahren zum Betreiben einer Schubladenvorrichtung zu schaffen.

Erfindungsgemäß wird diese Aufgabe durch eine Schubladenvorrichtung für ein Kühlgerät, ein Kühlgerät mit einer Schubladenvorrichtung und ein Verfahren zum Betreiben einer Schubladenvorrichtung mit den Merkmalen bzw. Schritten der Hauptansprüche gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass eine einfache und benutzerfreundliche Möglichkeit zum Öffnen und Schließen einer Schubladenvorrichtung für ein Kühlgerät geschaffen wird. Hierbei ist sowohl ein manuelles als auch ein berührungsloses Bedienen der besonders verschleißarmen Schubladenvorrichtung möglich.

Eine Schubladenvorrichtung für ein Kühlgerät weist eine Korpuseinheit, eine Schubladeneinheit und einen Linearmotor auf. Die Korpuseinheit ist zur Aufnahme der Schubladeneinheit ausgeformt. Die Schubladeneinheit ist gegenüber der Korpuseinheit beweglich gelagert, wobei die Schubladeneinheit mittels einer Linearbewegung zwischen einer Schließposition und einer Offenposition beweglich ist. Der Linearmotor ist ausgebildet, um die Linearbewegung zu bewirken, wobei der Linearmotor eine Elektromagneteinheit und eine Anordnung aus einer Mehrzahl von linear angeordneten Magneten mit abwechselnder Nordpolarität und Südpolarität aufweist. In der Schließposition kann die Schubladeneinheit beispielsweise vollständig in oder an der Korpuseinheit anordenbar und in der Offenposition zumindest teilweise beabstandet zu, beispielsweise teilweise außerhalb oder herausgefahren aus der Korpuseinheit, anordenbar sein. Die Elektromagneteinheit kann zumindest eine elektrische Spule aufweisen. Die Elektromagneteinheit ist ausgebildet, um ein mit den Magneten zusammenwirkendes Magnetfeld zu generieren. Eine solche Schubladenvorrichtung ermöglicht dank des Linearmotors vorteilhafterweise eine verschleißarme Möglichkeit zum automatischen und manuellen Öffnen und Schließen einer Schublade.

Die Elektromagneteinheit kann an der Korpuseinheit und die Mehrzahl von Magneten an der Schubladeneinheit angeordnet sein. So kann ein Gewicht der beweglichen Schubladeneinheit gering gehalten werden und es wird eine einfache elektrische Kontaktierung der Elektromagneteinheit ermöglicht. Alternativ kann die Elektromagneteinheit an der Schubladeneinheit und die Mehrzahl von Magneten an der Korpuseinheit angeordnet sein.

Gemäß einer Ausführungsform kann die Elektromagneteinheit zumindest zwei elektrische Spulen aufweisen. Mehrere elektrische Spulen ermöglichen eine erhöhte Stabilität der Schubladeneinheit an oder in der Korpuseinheit, beispielsweise während der Linearbewegung. Zudem kann durch eine Mehrzahl von elektrischen Spulen eine die Linearbewegung bewirkende Kraft erhöht werden.

Es ist weiterhin von Vorteil, wenn die Schubladenvorrichtung gemäß einer Ausführungsform ferner eine Schieneneinheit aufweist, die ausgeformt ist, um die Schubladeneinheit gegenüber der Korpuseinheit beweglich zu lagern, wobei die Schieneneinheit ausgeformt sein kann, um die Linearbewegung bei einer durch eine Person auf die Schubladeneinheit ausgeübten Kraft unabhängig von einem Betrieb des Linearmotors zu ermöglichen. Eine solche Schieneneinheit kann eine stabile Beweglichkeit der Schubladeneinheit an oder in der Korpuseinheit ermöglichen. Ferner kann ein Nutzer der Schubladenvorrichtung vorteilhafterweise zwischen einer manuellen Herbeiführung der Linearbewegung ohne Verwendung des Linearmotors oder einer berührungslosen Herbeiführung der Linearbewegung unter Verwendung des Linearmotors wählen.

Die Schieneneinheit kann beispielsweise zumindest ein gegenüber der Korpuseinheit bewegliches erstes Schienenelement aufweisen, das mit der Schubladeneinheit gekoppelt oder koppelbar ist und zusätzlich oder alternativ ein fixes zweites Schienenelement aufweisen, das mit der Korpuseinheit gekoppelt oder koppelbar ist. So kann eine bewegliche Aufnahme der Schubladeneinheit in oder an der Korpuseinheit durch Schienen realisiert werden.

Die Schubladenvorrichtung kann ein Magnetband aufweisen, das die Anordnung aus der Mehrzahl von linear angeordneten Magneten umfasst. Ein solches Magnetband ist als Fertigprodukt kostengünstig erhältlich und einfach montierbar.

Es ist weiterhin von Vorteil, wenn die Schubladenvorrichtung gemäß einer Ausführungsform eine Steuereinrichtung umfasst, die ausgebildet ist, um ansprechend auf ein Interaktionssignal, das eine Aktivierungs-Interaktion einer Person im Bereich der Schubladenvorrichtung anzeigt, ein Antriebssignal an den Linearmotor auszugeben, um die Linearbewegung zu bewirken. Die Aktivierungs-Interaktion kann beispielsweise eine berührungslose Handbewegung der Person im Bereich der Schubladenvorrichtung oder ein Berühren einer Taste im Bereich der Schubladenvorrichtung repräsentieren. So kann die Linearbewegung zum Öffnen oder Schließen der Schubladenvorrichtung schnell und einfach auf Wunsch der Person aktiviert werden.

Die Steuereinrichtung kann ausgebildet sein, um ansprechend auf ein weiteres Interaktionssignal, das eine Änderungs-Interaktion einer Person im Bereich der Schubladenvorrichtung anzeigt, ein weiteres Antriebssignal an den Linearmotor auszugeben, um die Linearbewegung zu ändern. Die Änderungs-Interaktion kann eine definierte Handbewegung oder ein Eingreifen der Person im Bereich der Schubladenvorrichtung während einer Durchführung der Linearbewegung repräsentieren. Beispielsweise kann das weitere Antriebssignal dazu ausgebildet sein, um die Linearbewegung abzubrechen und zusätzlich oder alternativ umzukehren. Das weitere Antriebssignal kann dazu dienen, um einen geänderten Bedienwunsch des Nutzers zu unterstützen.

Die Steuereinrichtung kann ferner ausgebildet sein, um ansprechend auf ein anderes Interaktionssignal, das eine Stopp-Interaktion einer Person im Bereich der Schubladenvorrichtung anzeigt, ein anderes Antriebssignal an den Linearmotor auszugeben, um die Schubladeneinheit an einer aktuellen Position zu fixieren. Die Stopp-Interaktion kann eine andere definierte Handbewegung oder ein anderes Eingreifen der Person im Bereich der Schubladenvorrichtung während der Linearbewegung repräsentieren. Das andere Antriebssignal kann dazu dienen, um ein gewünschtes Anhalten der Linearbewegung zu bewirken.

Es ist weiterhin von Vorteil, wenn die Schubladenvorrichtung gemäß einer Ausführungsform ausgebildet ist, um unter Verwendung zumindest eines physikalischen Parameters der Elektromagneteinheit eine Position der Schubladeneinheit gegenüber der Korpuseinheit zu ermitteln, und das Antriebssignal abhängig von der Position zu bewirken. Der physikalische Parameter kann beispielsweise als ein physikalischer Parameter der Spule einlesbar sein. So kann beispielsweise die Spule oder mehrere Spulen gleichzeitig als Sensoren genutzt werden, um die Position der Schubladeneinheit gegenüber der Korpuseinheit zu ermitteln.

Gemäß einer Ausführungsform kann die Steuereinrichtung ausgebildet sein, um ansprechend auf ein Konfigurationssignal, das eine Konfigurationsanforderung einer Person übermittelt, eine Charakteristik des Antriebssignals zu konfigurieren. Die Konfigurationsanforderung kann beispielsweise von einer Konfigurationsanwendung oder -software zum Einstellen von individuellen Konfigurationen für die Schubladenvorrichtung ermittelbar sein. So können von dem Nutzer beispielsweise Betriebsparameter für die Ausführung der Linearbewegung individuell einstellbar sein.

Die Steuereinrichtung kann ausgebildet sein, um ansprechend auf die Konfigurationsanforderung zum Konfigurieren einer Geschwindigkeit und zusätzlich oder alternativ Kraft und zusätzlich oder alternativ Beschleunigungskurve der Linearbewegung, eine Stromstärke und zusätzlich oder alternativ eine Frequenz des Antriebssignals zu konfigurieren. Hierbei kann beispielsweise die Frequenz mit der sich die Stromrichtung des Antriebssignals ändert konfiguriert werden.

Ein Kühlgerät weist eine Schubladenvorrichtung in einer der vorangehend beschriebenen Varianten und eine Kühleinrichtung zum Kühlen eines Innenraums der Schubladeneinheit auf. Einen solches Kühlgerät kann vorteilhafterweise die vorangehend beschriebenen Vorteile der Schubladenvorrichtung innerhalb eines Kühlgeräts realisieren. Bei dem Kühlgerät kann es sich um eine Kühlschublade oder Kälteschublade handeln.

Ein Verfahren zum Betreiben einer der vorangehend beschriebenen Schubladenvorrichtungen umfasst einen Schritt des Betreibens des Linearmotors in einem ersten Zustand und einen Schritt des Betreibens des Linearmotors in einem zweiten Zustand. Im Schritt des Betreibens des Linearmotors in dem ersten Zustand wird der Linearmotor in dem ersten Zustand betrieben, um die Schubladeneinheit in Richtung der Schließposition zu bewegen. Im Schritt des Betreibens des Linearmotors in dem zweiten Zustand wird der Linearmotor in dem zweiten Zustand betrieben, um die Schubladeneinheit in Richtung der Offenposition zu bewegen.

Das Verfahren kann ferner einen Schritt des Betreibens des Linearmotors in einem dritten Zustand aufweisen, in dem der Linearmotor in einem dritten Zustand betrieben wird, um die Schubladeneinheit in einer aktuellen Position zu halten.

Der hier beschriebene Ansatz kann anhand eines Haushaltgeräts oder entsprechend im Zusammenhang mit einem gewerblichen oder professionellen Gerät eingesetzt werden.

Ein Ausführungsbeispiel der Erfindung ist in den Zeichnungen rein schematisch dargestellt und wird nachfolgend näher beschrieben. Es zeigt
- Figur 1: eine seitliche Querschnittdarstellung eines Ausführungsbeispiels einer Schubladenvorrichtung für ein Kühlgerät;
- Figur 2: eine seitliche Querschnittdarstellung eines Ausführungsbeispiels einer Schubladenvorrichtung für ein Kühlgerät;
- Figur 3: eine seitliche Querschnittdarstellung eines Ausführungsbeispiels einer Schubladenvorrichtung für ein Kühlgerät;
- Figur 4: eine seitliche Querschnittdarstellung eines Ausführungsbeispiels einer Schubladenvorrichtung für ein Kühlgerät;
- Figur 5: eine perspektivische Seitenansicht eines Kühlgeräts mit einer Schubladenvorrichtung gemäß einem Ausführungsbeispiel; und
- Figur 6: ein Ablaufdiagramm eines Verfahrens gemäß einem Ausführungsbeispiel zum Betreiben einer Schubladenvorrichtung.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

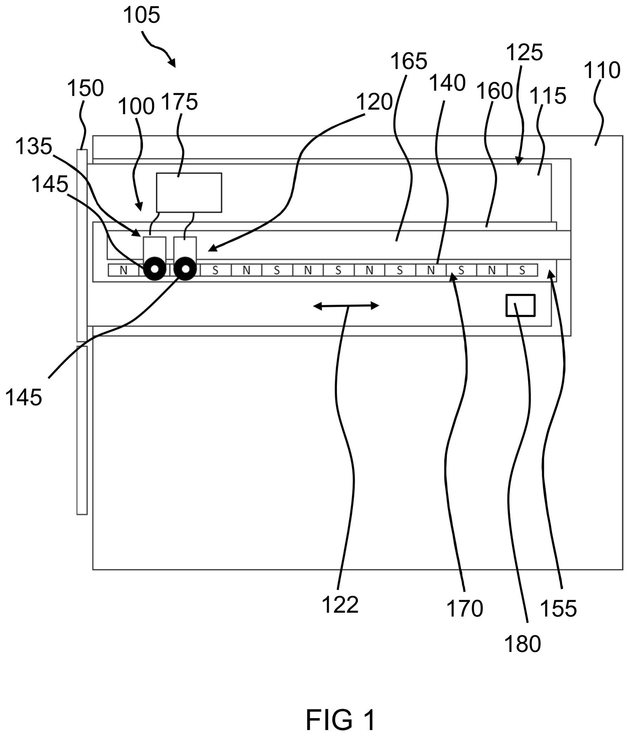

Figur 1 zeigt eine seitliche Querschnittdarstellung eines Ausführungsbeispiels einer Schubladenvorrichtung 100 für ein Kühlgerät 105.

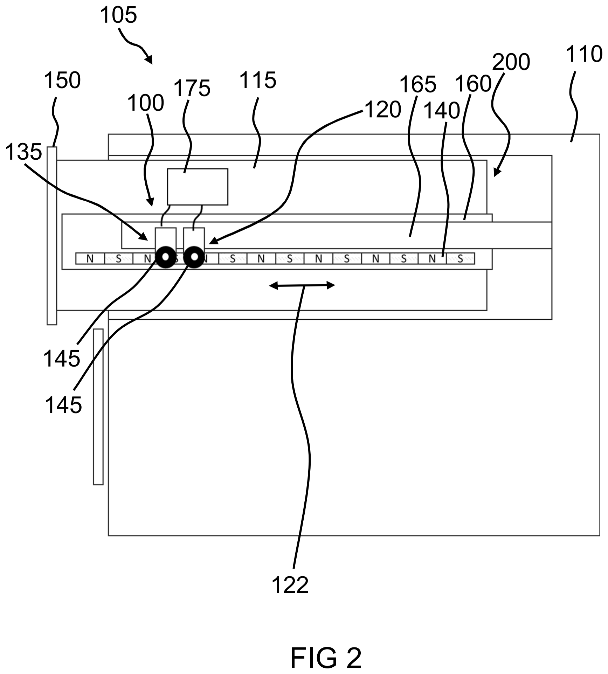

Die Schubladenvorrichtung 100 weist eine Korpuseinheit 110, eine Schubladeneinheit 115 und einen Linearmotor 120 auf. Die Korpuseinheit 110 ist zur Aufnahme der Schubladeneinheit 115 ausgeformt. Die Schubladeneinheit 115 ist gegenüber der Korpuseinheit 110 beweglich gelagert, wobei die Schubladeneinheit 115 mittels einer Linearbewegung 122 zwischen einer Schließposition 125 und einer Offenposition beweglich ist. Der Linearmotor 120 ist ausgebildet, um die Linearbewegung 122 zu bewirken, wobei der Linearmotor 120 eine Elektromagneteinheit 135 und eine Anordnung aus einer Mehrzahl von linear angeordneten Magneten 140 mit abwechselnder Nordpolarität N und Südpolarität S aufweist. In der hier gezeigten Schließposition 125 ist die Schubladeneinheit 115 vollständig in oder an der Korpuseinheit 110 angeordnet und in der in Figur 2 gezeigten Offenposition zumindest teilweise beabstandet zu, beispielsweise teilweise außerhalb oder herausgefahren aus der Korpuseinheit 110, angeordnet. Eine Frontseite 150 der Schubladeneinheit 115 verdeckt gemäß diesem Ausführungsbeispiel in der Schließposition 125 eine Öffnung zur Aufnahme der Schubladeneinheit 115 in die Korpuseinheit 110 vollständig ab, sodass die Schubladeneinheit 115 geschlossen ist. Die Frontseite 150 ist gemäß diesem Ausführungsbeispiel mit einer ebenen Oberfläche, beispielsweise grifflos, gestaltet. Die Elektromagneteinheit 135 weist gemäß diesem Ausführungsbeispiel zumindest eine elektrische Spule 145 auf. Die Elektromagneteinheit 135 ist ausgebildet, um ein mit den Magneten 140 zusammenwirkendes Magnetfeld zu generieren.

Die Elektromagneteinheit 135 ist gemäß diesem Ausführungsbeispiel an der Korpuseinheit 110 und die Mehrzahl von Magneten 140 an der Schubladeneinheit 115 angeordnet. Gemäß diesem Ausführungsbeispiel weist die Elektromagneteinheit 135 zumindest zwei elektrische Spulen 145 auf, die hier beispielhaft benachbart zueinander angeordnet sind.

Die Mehrzahl von Magneten 140 sind mit alternierender Polung nebeneinander entlang einer Längsachse angeordnet. Beispielsweise erstrecken sich die Mehrzahl von Magneten 140 über zumindest zwei Drittel oder zumindest drei Vierteil einer Länge einer Seitenwand der Schubladeneinheit 115. Die Linearbewegung 122 verläuft längs der Längsachse. Die elektrischen Spulen 145 der Elektromagneteinheit 135 sind benachbart zueinander entlang der Längsachse auf Höhe der Mehrzahl von Magneten 140 angeordnet.

Die Schubladenvorrichtung 100 weist gemäß diesem Ausführungsbeispiel ferner eine Schieneneinheit 155 auf, die ausgeformt ist, um die Schubladeneinheit 115 gegenüber der Korpuseinheit 110 beweglich zu lagern, wobei die Schieneneinheit 155 gemäß diesem Ausführungsbeispiel ausgeformt ist, um die Linearbewegung 122 bei einer durch eine Person auf die Schubladeneinheit 115 ausgeübten Kraft unabhängig von einem Betrieb des Linearmotors 120 zu ermöglichen. Die Schieneneinheit 155 weist beispielsweise zumindest ein gegenüber der Korpuseinheit 110 bewegliches erstes Schienenelement 160 auf, das mit der Schubladeneinheit 115 gekoppelt ist und/oder ein fixes zweites Schienenelement 165 auf, das mit der Korpuseinheit 110 gekoppelt ist. Die Schienenelemente 160, 165 sind gemäß diesem Ausführungsbeispiel derart miteinander gekoppelt, dass die Linearbewegung 122 der Schubladeneinheit 115 über das beweglich an dem zweiten Schienenelement 165 gekoppelte erste Schienenelement 160 ermöglicht ist.

Die Schubladenvorrichtung 100 weist gemäß diesem Ausführungsbeispiel ferner ein Magnetband 170 auf, das die Anordnung aus der Mehrzahl von linear angeordneten Magneten 140 umfasst. Das Magnetband 170 erstreckt sich gemäß diesem Ausführungsbeispiel über eine Haupterstreckungslänge des ersten Schienenelements 160, um die Linearbewegung 122 entlang des Magnetbands 170 zu ermöglichen.

Die Schubladenvorrichtung 100 umfasst gemäß diesem Ausführungsbeispiel ferner eine Steuereinrichtung 175, die ausgebildet ist, um ansprechend auf ein Interaktionssignal, das eine Aktivierungs-Interaktion einer Person im Bereich der Schubladenvorrichtung 100 anzeigt, ein Antriebssignal an den Linearmotor 120 auszugeben, um die Linearbewegung 122 zu bewirken. Die Aktivierungs-Interaktion repräsentiert beispielsweise eine berührungslose Handbewegung der Person im Bereich der Schubladenvorrichtung 100 oder ein Berühren einer Taste im Bereich der Schubladenvorrichtung 100. Die Steuereinrichtung 175 ist gemäß diesem Ausführungsbeispiel ausgebildet, um ansprechend auf ein weiteres Interaktionssignal, das eine Änderungs-Interaktion einer Person im Bereich der Schubladenvorrichtung 100 anzeigt, ein weiteres Antriebssignal an den Linearmotor 120 auszugeben, um die Linearbewegung 122 zu ändern. Die Änderungs-Interaktion repräsentiert beispielsweise eine definierte Handbewegung oder ein Eingreifen der Person im Bereich der Schubladenvorrichtung 100 während einer Durchführung der Linearbewegung 122.

Beispielsweise ist das weitere Antriebssignal gemäß einem Ausführungsbeispiel dazu ausgebildet, um die Linearbewegung 122 abzubrechen und/oder umzukehren. Die Steuereinrichtung 175 ist gemäß diesem Ausführungsbeispiel ferner ausgebildet, um ansprechend auf ein anderes Interaktionssignal, das eine Stopp-Interaktion einer Person im Bereich der Schubladenvorrichtung 100 anzeigt, ein anderes Antriebssignal an den Linearmotor 120 auszugeben, um die Schubladeneinheit 115 an einer aktuellen Position zu fixieren. Die Stopp-Interaktion repräsentiert beispielsweise eine andere definierte Handbewegung oder ein anderes Eingreifen der Person im Bereich der Schubladenvorrichtung 100 während der Linearbewegung 122.

Die Schubladenvorrichtung 100 ist gemäß diesem Ausführungsbeispiel ausgebildet, um unter Verwendung zumindest eines physikalischen Parameters der Elektromagneteinheit 135 eine Position der Schubladeneinheit 115 gegenüber der Korpuseinheit 110 zu ermitteln, und das Antriebssignal abhängig von der Position zu bewirken. Der physikalische Parameter ist beispielsweise als ein physikalischer Parameter der Spule 145 einlesbar.

Die Steuereinrichtung 175 ist gemäß diesem Ausführungsbeispiel ausgebildet, um ansprechend auf ein Konfigurationssignal, das eine Konfigurationsanforderung einer Person übermittelt, eine Charakteristik des Antriebssignals zu konfigurieren. Die Konfigurationsanforderung ist beispielsweise von einer Konfigurationsanwendung oder - software zum Einstellen von individuellen Konfigurationen für die Schubladenvorrichtung 100 ermittelbar. Die Steuereinrichtung 175 ist gemäß diesem Ausführungsbeispiel ausgebildet, um ansprechend auf die Konfigurationsanforderung zum Konfigurieren einer Geschwindigkeit und/oder Kraft und/oder Beschleunigungskurve der Linearbewegung 122, eine Stromstärke und/oder eine Frequenz des Antriebssignals zu konfigurieren. Hierbei wird beispielsweise gemäß einem Ausführungsbeispiel die Frequenz mit der sich die Stromrichtung des Antriebssignals ändert konfiguriert.

Gezeigt ist in Figur 1 ferner das Kühlgerät 105, das die Schubladenvorrichtung 100 und eine Kühleinrichtung 180 zum Kühlen eines Innenraums der Schubladeneinheit 115 aufweist. Gemäß einem alternativen Ausführungsbeispiel ist die Schubladenvorrichtung 100 im Zusammenhang mit einer Schubladenanordnung ohne Kühlfunktion einsetzbar.

Vorgestellt ist in Figur 1 das Kühlgerät 105 in Form eines Schubladenkühlgeräts mit automatischer Schubladenöffnung- und schließung. Das Kühlgerät 105 verfügt somit über automatische Türöffnungen und Türöffnungshilfen. Zum einen dienen diese Features dem Komfort, zum anderen sind sie zwingend notwendig, wenn das Kühlgerät 105 z. B. im Umfeld von grifflosen Küchen mit kundenspezifischen Frontseiten 150, im Folgenden auch "Front" genannt, eingesetzt werden soll.

Das hier vorgestellte Kühlgerät 105 in Form einer Kühlschublade ermöglicht dem Kunden eine besonders individuelle Küchengestaltung. Hierbei weist die hier vorgestellte Kühlschublade dank der Schubladenvorrichtung 100 vorteilhafterweise eine automatische Türöffnung und/oder Türöffnungshilfe auf. So ist die Kühlschublade beispielsweise als Einbauvariante mit kundenspezifischer Front realisierbar. Eine optimale Integration nach Kundenwunsch ist somit dank des hier vorgestellten Kühlgeräts 105 möglich.

Das hier vorgestellte Kühlgerät 105, das auch als Kühlschublade bezeichnet werden kann, weist vorteilhafterweise den Linearmotor 120 in Form eines Linearantriebs auf, oder anders ausgedrückt ist das Kühlgerät 105 mit Linearantrieb zur automatischen Schubladenöffnung und/oder Schubladenschließung, als Schloss und zur aktiven Dämpfung ausgeführt.

Anders als bei beispielsweise Linearantrieben in Form von Spindelantrieben, kann der Kunde bei der hier vorgestellten Schubladenvorrichtung 100 vorteilhafterweise manuell eingreifen, eine Mechanik des Spindelantriebs erlaubt dies hingegen nicht. Linearantriebe mit Spindelmechanik erlauben kein manuelles Auf- und Zuschieben, ohne dabei Schaden zu nehmen.

Anders als bei Kühlgeräten mit Türen, bei denen Linearantriebe zum Aufdrücken als Türöffnungshilfe und Schwenkantriebe im Scharnier zur automatischen Türöffnung oder Push-to-Open Aktuatoren zum Einsatz kommen, ist bei der hier vorgestellten Schubladenvorrichtung 100 vorteilhafterweise ein berührungsloses Herbeiführen der Linearbewegung 122 zum Öffnen und Schließen der Schubladenvorrichtung 100 ermöglicht.

Ein Verschleiß und eine Fehleranfälligkeit ist bei der hier vorgestellten Schubladenvorrichtung 100 gegenüber mechanischen Türöffnungs- und Schubladenöffnungshilfen gering. Vorteilhafterweise ist die Schubladenvorrichtung 100 ferner sehr Bauteilarm, da beispielsweise keine dämpfenden Elemente und sogenannte "Schnapper" benötigt werden. Die Schubladenvorrichtung 100 ermöglicht vorteilhafterweise ein automatisches Öffnen und Schließen, wobei die Schubladeneinheit 115 smart "abgeschlossen" oder in Position gehalten werden kann. So ist die Schubladeneinheit 115 immer optimal schließbar. Ferner ist die Schubladenvorrichtung 100 in ihrer automatischen Öffnung und/oder Schließung in Bezug auf Geschwindigkeit, Strecke, Kraft und/oder Beschleunigungskurve bis zu einem gewissen Grad durch den Kunden frei konfigurierbar. Dämpfende und haltende mechanische Elemente können bei der Schubladenvorrichtung 100 eingespart werden. Die Schubladenvorrichtung 100 kann ferner jeder Zeit und in jedem Zustand sowohl manuell als auch automatisch geöffnet und geschlossen werden. Weiterhin ist die Position der Schubladeneinheit 115 ermittelbar.

Bei der praktischen Umsetzung der Schubladenvorrichtung 100 werden gemäß einem Ausführungsbeispiel die Schienenelemente 160, 165 in Form von Schubladenschienen mit dem Linearmotor 120 kombiniert. Auf die ersten Schienenelemente 160 in Form von beweglichen Schienenteilen sind gemäß diesem Ausführungsbeispiel die Magnete 140 mit abwechselnder Nord-Süd Polarität aufgebracht. Magnetbänder 170 mit dieser Anordnung gibt es bereits fertig zu kaufen. An die zweiten Schienenelemente 165 in Form von statischen Schienenteilen sind gemäß diesem Ausführungsbeispiel elektrische Spulen 145 angebracht, die so ausgerichtet und angeordnet sind, dass sie je nach Bestromung die Magnete 140 auf dem beweglichen Teil der Schiene, also auf dem ersten Schienenelement 160, anziehen oder abstoßen. Die Spulen 145 werden gemäß diesem Ausführungsbeispiel gleichzeitig als Sensoren genutzt, um die Position der Schubladeneinheit 115 zu ermitteln. Über den eingebrachten Spulenstrom, die Geschwindigkeit mit der die Spulen 145 geschaltet werden und die Abfolge in der sie geschaltet werden, wird die Linearbewegung 122 nach gewünschten Vorgaben ermöglicht. Greift der Nutzer während des automatischen Öffnens oder Schließens ein, so wird dies detektiert und die Spulen 145 schalten in einen Modus, der den Nutzer unterstützt, oder zumindest nicht daran hindert. Die Kraft, die der Linearmotor 120 zum Öffnen und Schließen aufbringen muss, wird dabei gemäß einem Ausführungsbeispiel so gering gehalten wie möglich, dies ist adaptiv möglich. Verletzungen sind dadurch praktisch ausgeschlossen. Wird das manuelle Zu- oder Aufschieben der Schubladeneinheit 115 erkannt, so initiiert gemäß diesem Ausführungsbeispiel der Linearmotor 120 oder dessen Steuerung entsprechende Brems- und Haltemanöver, die zusätzliche Brems- und Haltemechaniken überflüssig machen. Die Schieneneinheit 155 mit Linearmotor 120 ist praktisch wartungsfrei, es gibt keinen physischen Kontakt zwischen Magnet 140 und Spule 145, was gegenüber mechanischen Varianten vorteilhaft ist.

Zusammengefasst ermöglicht die hier vorgestellte Schubladenvorrichtung 100 vorteilhafterweise eine automatische Türöffnung bzw. Türöffnungshilfe für Kühlschubladen. Ein manueller und automatischer Betrieb der Schubladenvorrichtung 100 ist auch gleichzeitig zerstörungsfrei möglich. Es sind wenige mechanische Bauteile erforderlich, beispielsweise zum Bremsen und Halten. Die Schubladenvorrichtung 100 ist praktisch Verschleißfrei. Die Schubladenvorrichtung 100 ebnet einen Weg für weitere digitale oder smarte Features. Die Schubladeneinheit 115 oder die gesamte Schubladenvorrichtung 100 ist ferner grifflos und hinter spezifischen Küchenfronten anbringbar und nutzbar. Weiterhin ist die Schubladenvorrichtung 100 vorteilhafterweise verriegelbar.

Die hier vorgestellte Schubladenvorrichtung 100 ist in allen Schubladen einsetzbar, vorzugsweise in Kühlschubladen, um dort analog zur automatischen Türöffnung beispielsweise großer Kühlgeräte 105 das Feature zu ermöglichen.

Figur 2 zeigt eine seitliche Querschnittdarstellung eines Ausführungsbeispiels einer Schubladenvorrichtung 100 für ein Kühlgerät 105. Dabei kann es sich um die in Figur 1 beschriebene Schubladenvorrichtung 100 handeln, mit dem Unterschied, dass diese gemäß diesem Ausführungsbeispiel in der Offenposition 200 angeordnet ist. Die Frontseite 150 der Schubladeneinheit 115 ist gemäß diesem Ausführungsbeispiel in der Offenposition 200 von der Öffnung zur Aufnahme der Schubladeneinheit 115 in die Korpuseinheit 110 wegbewegt angeordnet, sodass die Schubladeneinheit 115 offen ist.

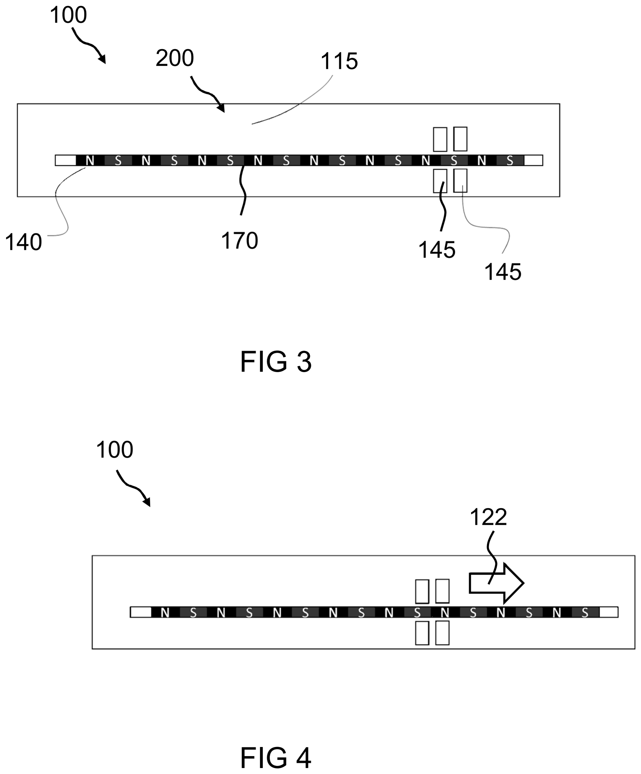

Figur 3 zeigt eine seitliche Querschnittdarstellung eines Ausführungsbeispiels einer Schubladenvorrichtung 100 für ein Kühlgerät 105. Dabei kann es sich um die in Figur 2 beschriebene Schubladenvorrichtung 100 handeln.

Das Magnetband 170 ist optional durch die zumindest eine Spule 145 durchgeführt. Alternativ ist die zumindest eine Spule 145 benachbart zu dem Magnetband 170 angeordnet. Gemäß einem alternativen Ausführungsbeispiel sind Spulen 145 der Elektromagneteinheit auf zwei einander gegenüberliegenden Seiten des Magnetbands 170 angeordnet.

Zwei einander gegenüberliegende freie Enden des Magnetbands 170 sind gemäß einem Ausführungsbeispiel an dem erste Schienenelement oder der Schubladeneinheit 115 fixiert. Gemäß einem alternativen Ausführungsbeispiel ist die zumindest eine Spule 145 fest am Gehäuse, also beispielsweise der Korpuseinheit, fixiert.

Figur 4 zeigt eine seitliche Querschnittdarstellung eines Ausführungsbeispiels einer Schubladenvorrichtung 100 für ein Kühlgerät. Dabei kann es sich um die in Figur 3 beschriebene Schubladenvorrichtung 100 handeln, mit dem Unterschied, dass diese gemäß diesem Ausführungsbeispiel im Vergleich zu dem in Figur 3 gezeigten Zustand weiter herausgezogen ist und nun durch die Linearbewegung 122 in Richtung der Schließposition bewegt wird.

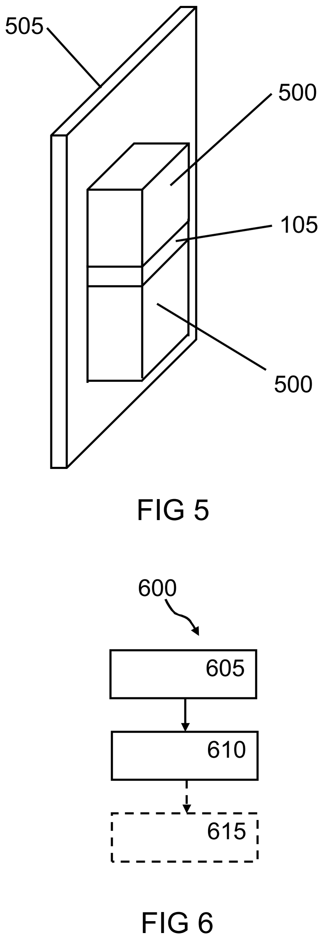

Figur 5 zeigt eine perspektivische Seitenansicht eines Kühlgeräts 105 mit einer Schubladenvorrichtung 100 gemäß einem Ausführungsbeispiel. Dabei kann es sich um die in einer der Figuren 1 bis 4 beschriebene Schubladenvorrichtung 100 handeln.

Das Kühlgerät 105 ist gemäß diesem Ausführungsbeispiel zwischen zwei Schränken 500 an einer Raumwand 505 installiert. Gemäß einem alternativen Ausführungsbeispiel handelt es sich bei zumindest einem der Schränke 500 alternativ um ein Einbaugerät.

Figur 6 zeigt ein Ablaufdiagramm eines Verfahrens 600 gemäß einem Ausführungsbeispiel zum Betreiben einer Schubladenvorrichtung. Dabei kann es sich um die in einer der Figuren 1 bis 5 beschriebene Schubladenvorrichtung 100 handeln.

Das Verfahren 600 umfasst einen Schritt 605 des Betreibens des Linearmotors in einem ersten Zustand und einen Schritt 610 des Betreibens des Linearmotors in einem zweiten Zustand.

Im Schritt 605 des Betreibens des Linearmotors in dem ersten Zustand wird der Linearmotor in dem ersten Zustand betrieben, um die Schubladeneinheit in Richtung der Schließposition zu bewegen. Im Schritt 610 des Betreibens des Linearmotors in dem zweiten Zustand wird der Linearmotor in dem zweiten Zustand betrieben, um die Schubladeneinheit in Richtung der Offenposition zu bewegen.

Das Verfahren 600 weist ferner gemäß diesem Ausführungsbeispiel einen Schritt 615 des Betreibens des Linearmotors in einem dritten Zustand auf, in dem der Linearmotor in einem dritten Zustand betrieben wird, um die Schubladeneinheit in einer aktuellen Position zu halten.

Die Schritte 605, 610, 615 können in beliebiger Reihenfolgen zeitlich nacheinander und wiederholt ausgeführt werden.

## Patentansprüche

1. Schubladenvorrichtung (100) für ein Kühlgerät (105), wobei die Schubladenvorrichtung (100) die folgenden Merkmale umfasst:
eine Korpuseinheit (110) zur Aufnahme einer Schubladeneinheit (115),
die Schubladeneinheit (115), die gegenüber der Korpuseinheit (110) beweglich gelagert ist, wobei die Schubladeneinheit (115) mittels einer Linearbewegung (122) zwischen einer Schließposition (125) und einer Offenposition (200) beweglich ist, und
einen Linearmotor (120), der ausgebildet ist, um die Linearbewegung (122) zu bewirken, wobei der Linearmotor (120) eine Elektromagneteinheit (135) und eine Anordnung aus einer Mehrzahl von linear angeordneten Magneten (140) mit abwechselnder Nordpolarität (N) und Südpolarität (S) aufweist.

2. Schubladenvorrichtung (100) gemäß Anspruch 1, bei der die Elektromagneteinheit (135) an der Korpuseinheit (110) und die Mehrzahl von Magneten (140) an der Schubladeneinheit (115) angeordnet ist.

3. Schubladenvorrichtung (100) gemäß einem der vorangegangenen Ansprüche, bei der die Elektromagneteinheit (135) zumindest zwei elektrische Spulen (145) aufweist.

4. Schubladenvorrichtung (100) gemäß einem der vorangegangenen Ansprüche, mit einer Schieneneinheit (155), die ausgeformt ist, um die Schubladeneinheit (115) gegenüber der Korpuseinheit (110) beweglich zu lagern, wobei die Schieneneinheit (155) ausgeformt ist, um die Linearbewegung (122) bei einer durch eine Person auf die Schubladeneinheit (115) ausgeübten Kraft unabhängig von einem Betrieb des Linearmotors (120) zu ermöglichen.

5. Schubladenvorrichtung (100) gemäß Anspruch 4, bei der die Schieneneinheit (155) zumindest ein gegenüber der Korpuseinheit (110) bewegliches erstes Schienenelement (160) aufweist, das mit der Schubladeneinheit (115) gekoppelt oder koppelbar ist und/oder ein fixes zweites Schienenelement (165) aufweist, das mit der Korpuseinheit (110) gekoppelt oder koppelbar ist.

6. Schubladenvorrichtung (100) gemäß einem der vorangegangenen Ansprüche, mit einem Magnetband (170), das die Anordnung aus der Mehrzahl von linear angeordneten Magneten (140) umfasst.

7. Schubladenvorrichtung (100) gemäß einem der vorangegangenen Ansprüche, mit einer Steuereinrichtung (175), die ausgebildet ist, um ansprechend auf ein Interaktionssignal, das eine Aktivierungs-Interaktion einer Person im Bereich der Schubladenvorrichtung (100) anzeigt, ein Antriebssignal an den Linearmotor (120) auszugeben, um die Linearbewegung (122) zu bewirken.

8. Schubladenvorrichtung (100) gemäß Anspruch 7, bei der die Steuereinrichtung (175) ausgebildet ist, um ansprechend auf ein weiteres Interaktionssignal, das eine Änderungs-Interaktion einer Person im Bereich der Schubladenvorrichtung (100) anzeigt, ein weiteres Antriebssignal an den Linearmotor (120) auszugeben, um die Linearbewegung (122) zu ändern.

9. Schubladenvorrichtung (100) gemäß einem der Ansprüche 7 oder 8, bei der die Steuereinrichtung (175) ausgebildet ist, um ansprechend auf ein anderes Interaktionssignal, das eine Stopp-Interaktion einer Person im Bereich der Schubladenvorrichtung (100) anzeigt, ein anderes Antriebssignal an den Linearmotor (120) auszugeben, um die Schubladeneinheit (115) an einer aktuellen Position zu fixieren.

10. Schubladenvorrichtung (100) gemäß einem der Ansprüche 7 bis 9, bei der die Steuereinrichtung (175) ausgebildet ist, um unter Verwendung zumindest eines physikalischen Parameters der Elektromagneteinheit (135) eine Position der Schubladeneinheit (115) gegenüber der Korpuseinheit (110) zu ermitteln, und das Antriebssignal abhängig von der Position zu bewirken.

11. Schubladenvorrichtung (100) gemäß einem der Ansprüche 7 bis 10, bei der die Steuereinrichtung (175) ausgebildet ist, um ansprechend auf ein Konfigurationssignal, das eine Konfigurationsanforderung einer Person übermittelt, eine Charakteristik des Antriebssignals zu konfigurieren.

12. Schubladenvorrichtung (100) gemäß Anspruch 11, bei der die Steuereinrichtung (175) ausgebildet ist, um ansprechend auf die Konfigurationsanforderung zum Konfigurieren einer Geschwindigkeit und/oder Kraft und/oder Beschleunigungskurve der Linearbewegung (122), eine Stromstärke und/oder eine Frequenz des Antriebssignals zu konfigurieren.

13. Kühlgerät (105) mit einer Schubladenvorrichtung (100) gemäß einem der vorangegangenen Ansprüche und einer Kühleinrichtung (180) zum Kühlen eines Innenraums der Schubladeneinheit (115).

14. Verfahren (600) zum Betreiben einer Schubladenvorrichtung (100) gemäß einem der Ansprüche 1 bis 12, wobei das Verfahren (600) die folgenden Schritte umfasst:
Betreiben (605) des Linearmotors (120) in einem ersten Zustand, um die Schubladeneinheit (115) in Richtung der Schließposition (125) zu bewegen; und
Betreiben (610) des Linearmotors (120) in einem zweiten Zustand, um die Schubladeneinheit (115) in Richtung der Offenposition (200) zu bewegen.

15. Verfahren (600) gemäß Anspruch 14, mit einem Schritt (615) des Betreibens des Linearmotors (120) in einem dritten Zustand, um die Schubladeneinheit (115) in einer aktuellen Position zu halten.
